# EUROPEAN PATENT APPLICATION

(11) **EP 1 645 542 A2**
(43) Date of publication of application: **12.04.2006**
(21) Application number: 05425652.4
(22) Date of filing: 19.09.2005
(51) Int. Cl.: C01B 31/02, C04B 35/52

(54) **Anisotropic carbon alloy having aligned carbon nanotubes**

(30) Priority: 20.09.2004 US 944964
(71) Applicant: Lockheed Martin Corporation, Bethesda, MD 20817 (US)
(72) Inventor: Gardner, Slade H., Fort Worth Texas 76107 (US)
(74) Representative: Iannone, Carlo Luigi

(57) **Abstract**

An anisotropic carbon alloy (ACA) is formed from various carbon allotropes such as SWCNT, fullerenes, MWCNT, diamond-like carbon, diamond, nanocrystalline diamond, diamondoids, amorphous carbon, graphitic polyhedral crystals, graphite, graphene, HOPG, and hydrogenated amorphous carbon. The SWCNTs are present in different morphologies such as ropes, bundles, single filaments, tangled webs, etc. The SWCNT have large aspect ratios and weave throughout the ACA. By orienting or aligning the SWCNTs, directional physical properties of the SWCNTs may be observed in the ACA. Many morphologies of ACA are possible with a range of properties attainable as a function of the composition of carbon allotropes and post-processing techniques. Post-processing, such as annealing, can be done to further enhance particular properties of the ACA.

## Description

### RELATED APPLICATIONS

This application is related to and incorporates by reference U.S. Patent Application Serial No. 10/455,495 entitled "PURE CARBON ISOTROPIC ALLOY OF ALLOTROPIC FORMS OF CARBON INCLUDING SINGLE-WALLED CARBON NANOTUBES AND DIAMOND-LIKE CARBON" filed on June 5, 2003 for inventors Slade H. Gardner.

### TECHNICAL FIELD OF THE INVENTION

The present invention relates in general to materials that comprise carbon allotropes and, in particular, to a homogeneous mixture of carbon allotropes, that includes aligned carbon nanotubes and exhibits the anisotropic properties associated with the aligned carbon nanotubes.

### BACKGROUND OF THE INVENTION

Elemental carbon has many different allotropic forms and applications. This wide variety of allotropic forms is attributable to carbon being the only element in the periodic table known to have isomers with 0, 1, 2, or 3 dimensions. The carbon atom can hybridize electronic states in several different valence bonds which allows for a variety of different atomic bonding configurations. The isomers can have sp, sp2, or sp3 hybridization in the valence election orbitals. Some of the more common forms of carbon are graphite, charcoal, carbon fibers, and diamond. Many other allotropes of carbon exist, some of which have been discovered as recently as within the last 20 years.

Carbon fullerenes are molecules with an ellipsoidal shape. One form of fullerenes typically contains 60 carbon atoms with near-planar sp2 hybridization. Each molecule resembles a soccer ball in configuration with a collection of pentagonal and hexagonal rings. Larger fullerenes with 70 or 84 carbon atoms do exist but are less common and more ellipsoidal in shape. Carbon fullerenes have been made using an arc-discharge method to generate carbon plasma. This is followed by a controlled deposition in a furnace.

Carbon nanotubes, another allotropic form of carbon, also have sp2 near-planar hybridization, but form high aspect ratio, hollow tubes. Carbon nanotubes can have a range of diameters of about 0.7 nm and larger. The mechanical properties of single tubes have very high strength, stiffness, and elongation making Carbon nanotubes a most impressive structural material. Carbon nanotubes have been made using several techniques such as arc-discharge and laser ablation to generate carbon plasma. Controlled catalytic deposition often follows and may be performed in a furnace. Two types of carbon nanotubes include single-wall carbon nanotubes (SWCNT) and multi-wall carbon nanotubes (MWCNT). A SWCNT appears as a single filament of material and has superior mechanical behavior to the MWCNT type. A MWCNT is a collection of carbon nanotubes nested inside other carbon nanotubes to make a sheathed tube.

The absence of chemical bonding between carbon nanotubes can result in slippage between adjacent nanotubes. This slippage prevents the effective translation of load radially from the nanotube. Furthermore, since a MWCNT is larger in diameter than a SWCNT, the aspect ratio is smaller resulting in larger cross sectional area and lower specific strength. Different morphologies of SWCNT have been demonstrated. Some of these morphologies are tangled webs, aligned filaments, bundles, ropes, and crystals. Therefore a need exists to radially translate loads from carbon nanotubes.

Polycrystalline Diamond, another carbon allotrope, has sp3 hybridization and a continuous 3-dimensional structure of carbon atoms. Diamond is one of the hardest materials known. Due to the potential applications for this material, techniques for vapor phase deposition of diamond have been developed and advanced. Recent developments have led to the formation of nanocrystalline diamond as a domain of diamond material in a second phase of graphitic carbon. Diamondoids, a recently discovered carbon allotrope, comprise very small diamond crystals, 4-11 crystal cages of carbon in size. Diamondoids are essentially small particles of diamond that have been identified as possible building blocks for nano-structured materials.

Another allotrope of carbon is diamond-like carbon (die) is a broad class of amorphous materials having sp2 and sp3 hybridized carbon and hydrogen. The physical and chemical properties of die are between diamond and graphite. The most notable feature of die is high hardness. Techniques for vapor phase deposition of die have been advanced recently.

Amorphous carbon describes a disordered, three-dimensional material with random sp2 and sp3 hybridization. Amorphous graphite consists mostly of sp2 hybridization having random stacking of graphitic layer segments. Hydrogenated amorphous carbon is a die with a significant fraction of sp3 hybridization.

While graphite is another commonly known form of carbon. There are many types of graphite with a wide range of properties and applications. Graphite is a layered, planar form of carbon bonded in a hexagonal array with sp2 hybridization. The different types of graphite typically describe the degree of order of the planar layers, the flatness of the planar layers, and the distance between the planar layers. Amorphous graphite has been described above and has little order and a relatively large interlaminar spacing. When this material has curved and twisted planar layers it is called tubostratic graphite. Highly Oriented Pyrolytic Graphite (HOPG) is a synthetic material with nearly perfect planar structure that is very ordered with a minimum interlaminar spacing.

The term graphene describes a single sheet of graphite, so order is not significant and layer spacing is large enough that it is essentially irrelevant. A graphene platelet is a single small layer of material. Graphitic polyhedral crystals have been reported which resemble a very large MWCNT with a high degree of order and small interlaminar spacing, but the layers are not strictly flat. The graphite layers wrap consistently around a polyhedral core to form a crystal shaped structure. Graphite whiskers, also called vapor grown carbon fibers, have a tree ring concentric cylinder morphology which is similar to the polyhedral graphitic crystals, but are formed about around a circular core to make a fibrous shape. Often carbon and graphite are used as reinforcement in a composite system.

A composite combines a number of different materials that form a single material. Composites typically include hard, strong, or stiff fibers or particles that reinforce a softer, more compliant material.

An alloy traditionally describes a homogeneous mixture of different metals to make a material with designed properties. Similarly, in polymer science, an alloy is a blend of different polymers in order to realize a desired set of properties. In both of these definitions of an alloy, two or more materials homogeneously combine to form a single material. Needs have been identified for the combined properties of the different carbon allotropes. Although these carbon allotropes are individually useful they lack the combined properties desired.

### SUMMARY OF THE INVENTION

The present invention provides a homogeneous mixture (alloy) of carbon allotropes to substantially address the previously identified needs as well as others. More specifically, the present invention provides an alloy of carbon allotropes wherein at least one carbon allotrope is aligned to exhibit anisotropic properties. Additionally, wherein the properties of this alloy exceed those of previously developed alloys or composites.

One embodiment of the present invention provides an alloy of carbon allotropes to form anisotropic carbon alloy (ACA). A significant component of the ACA is single-walled carbon nanotubes (SWCNT). The remaining components of the pure ACAs are various carbon allotropes such as but not limited to fullerenes, MWCNT, diamond-like carbon, diamond, nanocrystalline diamond, diamondoids, amorphous carbon, graphitic polyhedral crystals, graphite, graphene, HOPG and hydrogenated amorphous carbon.

Although SWCNTs are a significant component of an ACA, SWCNTs need not comprise the majority of the composition. The directional nature or properties of SWCNTs allows the ACA to exhibit anisotropic properties when the SWCNTs are aligned. These anisotropic properties may include stiffness, strength, thermal conductivity or electrical conductivity. In fact, these anisotropic properties may allow the material to translate energy, such as but not limited to, electrical, thermal, or optical. SWCNTs may take many different morphologies such as ropes, bundles, single filaments, tangled webs, etc. SWCNT have large aspect ratios and weave throughout the alloy. Voids are kept to a minimum but may be impossible to prevent entirely. Macroscopically, aligned carbon nanotubes allow the alloy to exhibit significant anisotropic properties. Additionally, by controlling the degree of alignment, the strength, stiffness, thermal conductivity and electrical conductivity can be tailored to suit the specific uses of the ACA material.

One method of manufacturing ACA utilizes the deposition of carbon. For example, in a single step process, a suitable reactor with a single reactant stream using PVD, CVD, Plasma reaction, sputtering techniques, particle spray, plasma spray, etc. is used to deposit the carbon allotropes.

In another example, a multi-step process can be used where a first layer is deposited using a suitable reactor to deposit a first layer of carbon allotrope(s). An external magnetic or electric field may be applied to control the orientation of the deposited carbon allotropes. A second deposition within the same or different reactor deposits additional carbon allotropes. This multi-step process does not need to be limited to two different depositions, and can include a multitude of different layers and reactors. The multi-step process is repeated until build up of structure is complete. A second application of an electrical or magnetic field may be applied to control the orientation of the deposited carbon allotropes.

Many morphologies of ACA are possible with a large range of properties attainable as a function of the composition of carbon allotropes and post-processing techniques. Post-processing may further consolidate or densify the material to enhance particular properties of the ACA. Post-processing techniques include annealing, hot isostatic pressure (HIP), furnace heating, ion beam irradiation, electron beam irradiation, laser irradiation, electric resistive heating, inductive heating, IR irradiation, etc.

Contaminants maybe present in the ACA as a consequence of the process equipment, process feedstock, or catalysts used in the reactors. These contaminants are recognized as unavoidable and do not add to the structural performance of the alloy. However, contaminants beneficially fill areas or inclusions to occupy space that may otherwise become a void area. Contaminants may include oxides, metals, nitrides, halides, organics, carboxyls, cyanides, carbonyls, etc. These contaminates may be used to create active chemical properties associated with the ACA.

The foregoing and other objects and advantages of the present invention will be apparent to those skilled in the art, in view of the following detailed description of the preferred embodiment of the present invention, taken in conjunction with the appended claims and the accompanying drawings.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:

FIG. 1 is a schematic diagram of one embodiment of a composition of matter constructed in accordance with an embodiment of the present invention;

FIG. 2 is a schematic diagram of second embodiment of a composition of matter constructed in accordance with an embodiment of the present invention;

FIG. 3 is a schematic diagram of third embodiment of a composition of matter constructed in accordance with an embodiment of the present invention.

FIG. 4 depicts a pathway using one anisotropic alloy to translate energy.

FIG. 5 depicts one methodology for forming a homogeneous mixture of carbon allotropes by deposition in accordance with an embodiment of the present invention;

FIG. 6 depicts a second methodology for forming a homogeneous mixture of carbon allotropes in accordance with an embodiment of the present invention;

FIG. 7 depicts another method for forming a homogeneous mixture of carbon allotropes on a substrate in accordance with an embodiment of the present invention;

FIG. 8 provides a functional diagram of a carbon plasma generation zone within a reactor;

FIG. 9 provides a functional diagram of multiple zones within a reactor;

FIGs. 10A, 10B, and 10C depict various substrates on which the homogeneous mixture of carbon allotropes may be deposited; and

FIGs. 11A, 11 B and 11C depict various lattice structures associated with SWCNTs to be utilized within the homogeneous mixture of carbon allotropes.

### DETAILED DESCRIPTION OF THE INVENTION

Preferred embodiments of the present invention are illustrated in the FIGUREs, like numerals being used to refer to like and corresponding parts of the various drawings.

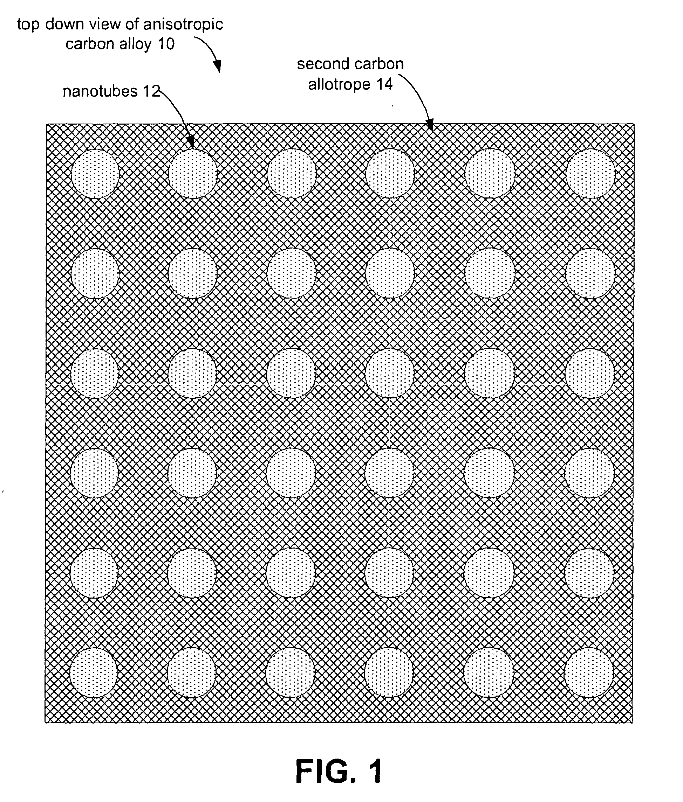

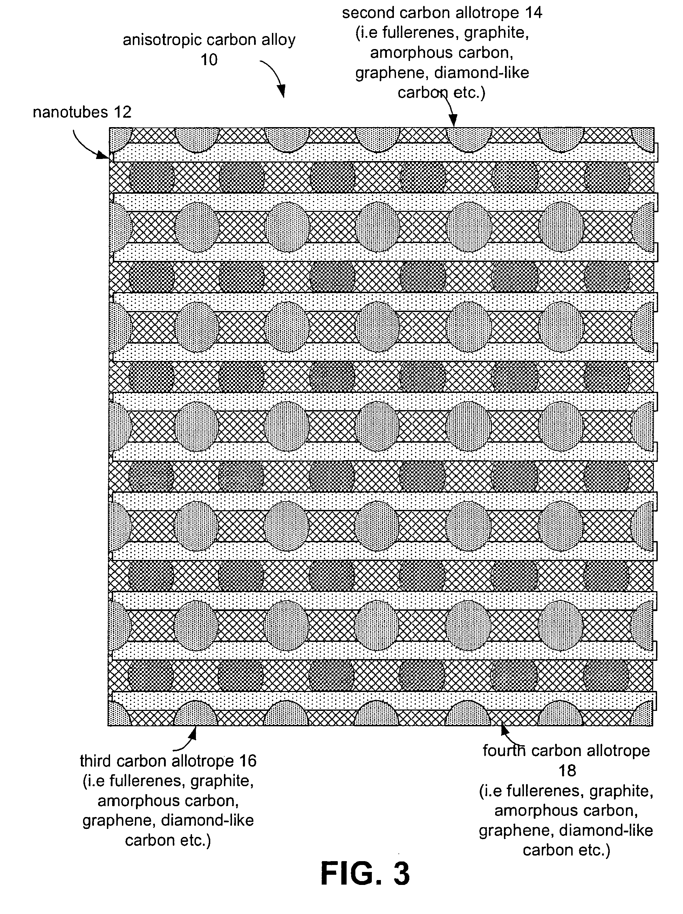

FIG. 1 provides a view of one embodiment of anisotropic carbon alloy (ACA) 10. Here, ACA 10 comprises a homogeneous mixture of nanotubes 12 and a second carbon allotrope 14. Although FIG. 1 depicts only two carbon allotropes, a plurality of carbon allotropes may be used to create ACA 10 as will be illustrated in FIG. 3. Nanotubes 12 may be single-walled carbon nanotubes or multi-walled carbon nanotubes and are ideally uniformly distributed within ACA 10. As shown these carbon nanotubes 12 are oriented such that they are perpendicular to the plane of the second carbon allotrope 14. Although, as shown in FIG. 1, the carbon allotrope alloy only contains various carbon allotropes, other materials such as silicon may be included in this alloy in other embodiments.

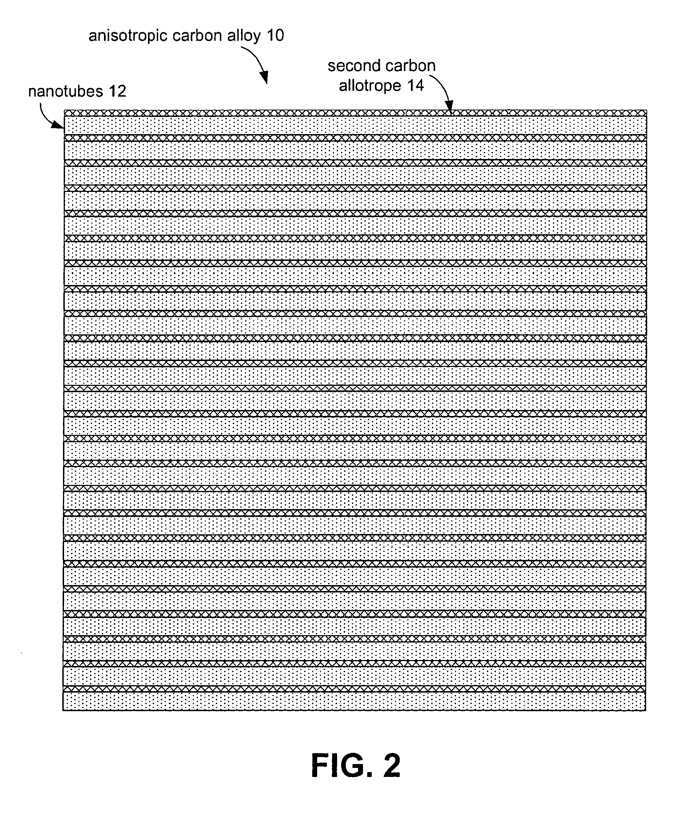

FIG. 2 shows a second ACA 10 wherein nanotubes 12 are oriented parallel to the plane of the second carbon allotrope 14. FIG. 3 depicts a third embodiment of anisotropic carbon alloy 10 wherein the anisotropic carbon alloy has a plurality of carbon allotropes. As in FIGs. 1 and 2, nanotubes 12 of present and may be oriented in order to realize the anti-isotropic properties associated with the carbon nanotubes. In addition to nanotubes 12 FIG. 3 depicts a second, third and fourth carbon allotrope 14, 16 and 18, respectively. Each of these carbon allotropes may compromise diamond, diamond-link carbon, multi-walled carbon nanotubes, fullerenes, graphite, graphene, amorphous carbon, and other forms of carbon known to those skilled in the art.

In one embodiment, SWCNTS comprise between about 10% and about 60% of the anisotropic carbon alloy while diamond like carbon comprises the remaining 40% to 90% comprise. The carbon allotropes themselves may also exhibit variation. For example when fullerenes are present, C60, C70, C72, C84, or other fullerenes molecules known to those skilled in the art may be present. The fullerenes may comprise approximately 90% C60 molecules, and approximately 10% C70 molecules. One ACA has a tensile modulus of approximately 55 Msi, a tensile strength of approximately 1500 ksi, and a density of 1.4 g/cc.

ACA presents several advantages. The properties may be tailored to be isotropic or anisotropic. For example, density, and refractive index need not vary with distance or direction. However, it may be very desirable to vary other properties such as thermal conductivity, electrical conductivity, electrical permittivity, magnetic permeability with the direction of static or propagating magnetic, electrical, or electromagnetic fields within the material. Additionally, thermal properties may be chosen to vary or not vary with direction.

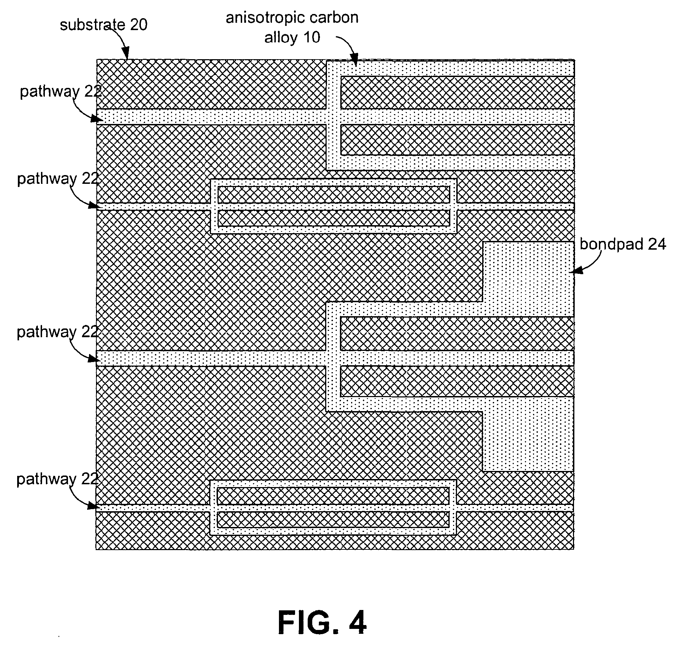

Although alloy composition includes SWCNTs, the composition may also include various other carbon allotropes such as fullerenes, MWCNT, diamond-like carbon, diamond, nanocrystalline diamond, diamondoids, amorphous carbon, graphitic polyhedral crystals, graphite, graphene, HOPG and hydrogenated amorphous carbon. The SWCNTs are present in different morphologies such as ropes, bundles, single filaments, and tangled webs. The SWCNT have large aspect ratios and weave throughout the alloy. The carbon alloys illustrated in FIGs. 1 through 3 may be used to translate energy via pathways as illustrated in FIG. 4. As shown here, the anisotropic carbon alloy test is used to form various pathways 22 which may be used to translate energy. The pathways may be formed on a substrate 20 which itself may be another carbon alloy. In order to not translate energy through the substrate, it may be desirable that the substrate 20 be made of an isotropic carbon alloy while the pathways 22 are formed from anisotropic carbon alloys 10. Bond pad 24 illustrates that electrical or thermal energy may be translated through the pathways 22 to an exterior device. For example, in the case of thermal energy, the bond pad 24 may be used to translate and dissipate heat or thermal energy through pathway 22 and off the device via bond pad 24. Similarly, pathways 22 may be used to translate other forms of energy such as, but not limited to electrical, thermal, optical, or other forms of energy known to those skilled in the arts. Translating thermal energy away from a device via pathways 22 would, for example, greatly improve the ability of an integrated circuit to dissipate generated heat to a thermal sink. Similarly, should a device need to be required at a predetermined temperature, thermal energy may be translated from outside the device through bond pads 24 and pathways 22 to a device required to be maintained at a predetermined temperature in order to properly operate.

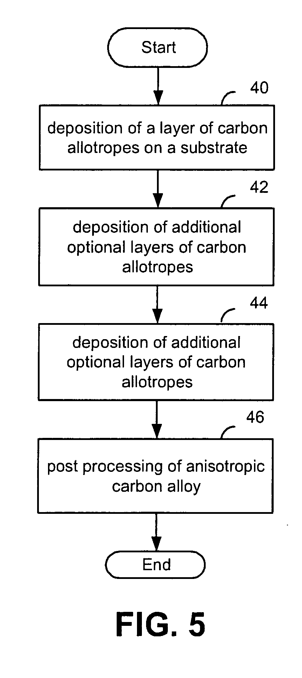

The ACA may be formed by depositing carbon. This methodology is illustrated in FIG. 5. The deposition can happen in a single step or a multi-step process. The single step process can make use of a suitable reactor with a single reactant stream to deposit an initial carbon allotrope on a substrate in step 40. Such a reactor may be a PVD, CVD, plasma reaction, sputtering techniques, particle spray, or plasma spray type reactor. A multi-step process can deposit a number of layers. This may involve the use of the same or multiple reactors or deposition chambers suited to each layer's deposition. Step 42 provides the option of depositing an additional layer using another suitable reactor or chamber. This multi-step process need be limited to two different depositions, and can include a multitude of different layers and reactors or chambers. The multi-step process is repeated until the desired structure is complete.

Many morphologies of ACA are possible with a range of properties attainable as a function of the chosen substitute, the composition of carbon allotropes, and post-processing techniques. For example one may choose to enhance the property of fabric by synthesizing carbon allotropes on the fabrics depicted in U.S. Patent application entitled Ballistic Fabrics with Improved Antiballistic Properties, serial no. which is hereby incorporated by reference. The SWCNTs synthesized may be aligned or oriented to achieve the desired set of physical properties as indicated in step 44. Post-processing within step 46 can further enhance particular properties of the ACA. Post-processing techniques may include, for example, annealing, HIP, furnace heating, ion beam irradiation, electron beam irradiation, laser irradiation, electric resistive heating, inductive heating, or IR irradiation.

Contaminants may be present in the ACA as a consequence of the process equipment, process feedstock, or catalysts used in the reactors. These contaminants are recognized as unavoidable and do not add to the structural performance of the alloy. However, these contaminants may increase the chemical functionalities of the ACA. Contaminants may also beneficially fill areas or inclusions to occupy space that may otherwise become a void area. Contaminants may include, for example, oxides, metals, nitrides, nitrites, halides, organics, carboxyls, cyanides, or carbonyls.

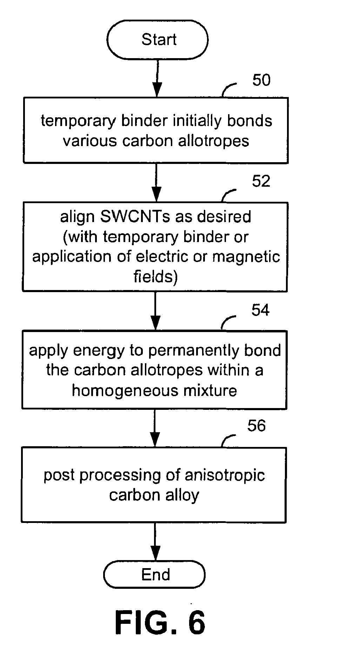

One embodiment forms the carbon alloy, as illustrated by the process steps of FIG. 6. Step 54 adds energy to a mixture of allotropes and a temporary binder. The temporary binder initially bonds the various allotropes of carbon in step 50. This temporary binder may also serve to align the SWCNTs as desired in step 52. Subsequent step 56 burns off the binder after the carbon alloy is permanently bonded.

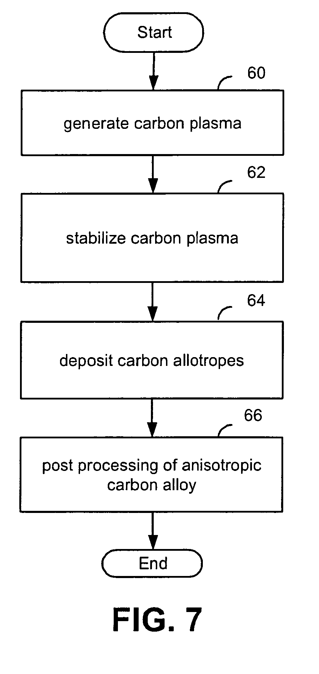

A continuous process may be used to form the ACA as well. For example, the ACA may be formed by the multi-step process of FIG. 7. This involves carbon plasma generation of step 60, followed by plasma stabilization of step 62 and product spray deposition of Step 64. These steps are all scalable to large, industrial volume production levels. The plasma of step 60 may be generated in several continuous manners. These manners include electrical resistance heating and/or electron beam vaporization of feedstock, and catalytic pyrolysis of organic precursors. Step 62 may stabilize the plasma with, for example, radio frequency energy from inductance coils. Step 64 utilizes a transition metal catalyst and associated required catalyst support to form the end product of SWCNTs, which may be oriented by the application of an electric or magnetic field in Step 66.

In one embodiment, continuous, large scale production of SWCNTs for manufacturing high performance structures offers many advantages. This method provides for (a.) the continuous generation of carbon plasma, (b.) stabilization of the carbon plasma for homogenization of the reactant mixture and transport of a high concentration of carbon plasma to the product formation zone, and (c.) a continuous operation, flow-through reactor design. In addition, the entire apparatus is designed so that it can be mounted vertically, such that continuous deposition of product can be precisely applied to a structure using an overhead robotic arm. Flow through design also allows the formation of anisotropic or isotropic carbon alloys on a continuously fed substrate such as a fabric.

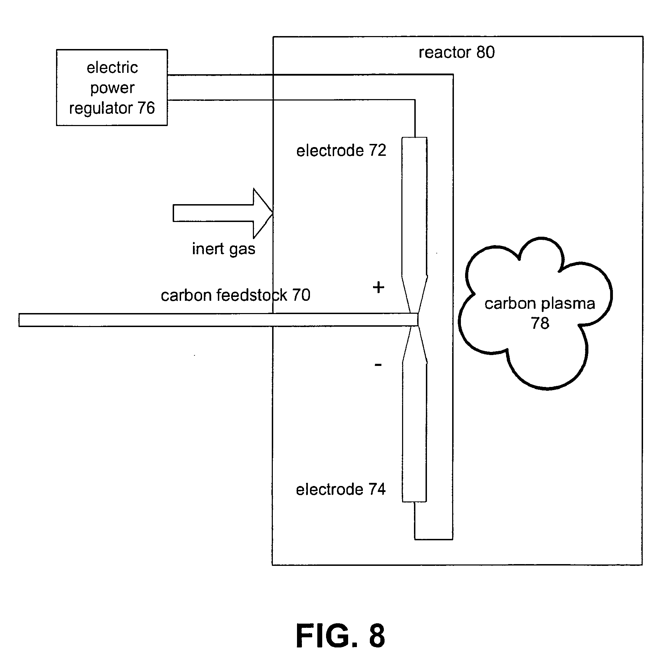

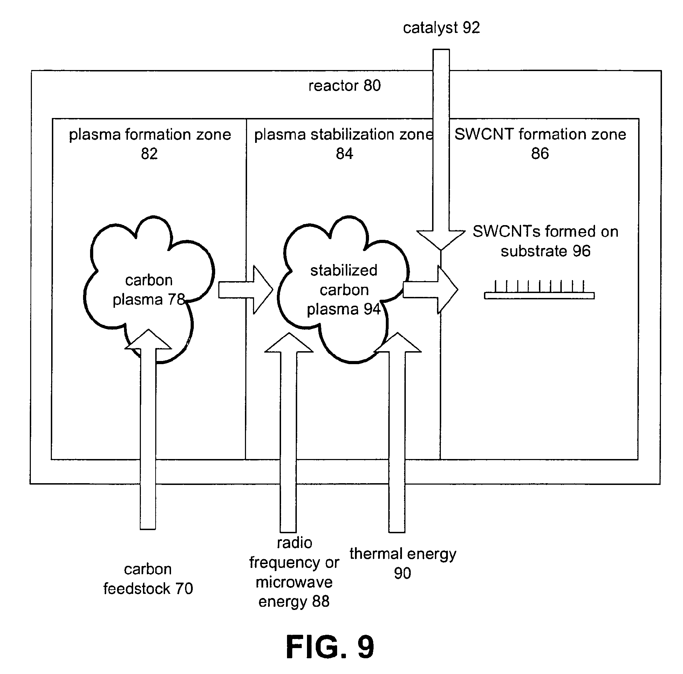

The initiation of the carbon plasma of step 60 may be accomplished by several methods. One method involves the vaporization of a resistively-heated graphite element to create thermal plasma as illustrated in FIG. 8 and the plasma generation zone 82 of FIG. 9. Carbon or graphite feedstock 70, readily available as rod stock, fiber, or in a special-designed geometry, continuously feeds over two oppositely-charged electrodes, 72 and 74 respectively. Low voltage, high current, electric power is then passed through the feedstock 70. This results in rapid resistance-heating of feedstock 70. Electric power regulator 76 provides feedback control from an ultra-high temperature pyrometer, which measures the element temperature in order to maintain a peak temperature of around 3000°C. Reactor 80 is closed and sealed with a reduced pressure inert atmosphere of continuously-flowing inert gas. By controlling the feed rate of the feedstock, the pressure of the inert gas, and the electric power level, partial vaporization of feedstock 70 is controlled to a level such that sufficient carbon remains to allow a continuous line feed.

Another method generates the carbon plasma by vaporizing the feedstock 70 with an electron beam. This method uses an e-beam focused on, for example, a graphite feedstock to generate a carbon plasma. This design allows localized directional control of the energy and efficient energy transfer because of the highly conductive nature of the graphite.

Yet another method generates carbon plasma 78 through catalytic pyrolysis of organic precursors. This is accomplished using a continuous feed of hydrocarbons in an inert gas stream through a heated zone or bypassing through a plasma jet. The heated zone can be accomplished using a device like a tube furnace or a tungsten coil. The plasma jet can be accomplished using a cathode/anode plasma gun using a high voltage discharge to dissociate and ionize the hydrocarbon feedstock. These various methods for generation are interchangeable within plasma generation zone 82.

Returning to FIG. 7, step 62 stabilizes the plasma within the stabilization zone of FIG. 9. Chemical engineering reactor design specifies that reactants should form a homogeneous mixture for optimization of product yield, purity, and reaction rate. This often ignored stabilization step homogenizes the plasma energy density and concentration, leading to a more efficient reactor. The stabilization of the carbon plasma uses inductively coupled radio frequency (RF) energy or microwave (MW) energy from a wave guide. The power and frequency are controlled such that the carbon plasma remains stable in the vapor phase. Electrical resistance heaters also can be added inside the reactor to maintain a chamber temperature of up to 1700°C. This additional thermal energy 90 may be used to reduce the required RF or MW energy needed to stabilize the carbon plasma. This additional energy may also promote higher concentrations of carbon vapor in the reactor and serve to align the deposited SWCNTS. Stabilization of the plasma occurs immediately downstream from the generated plasma.

The next stage forms the SWCNTs. One of the important elements of formation zone 86 is the addition of transition metal catalyst 92 and associated catalyst support. The formation zone may have variations of geometry and supporting equipment that will affect the rate, purity, and orientation of SWCNTs. Formation zone 86 is immediately downstream from the plasma stabilization zone 84.

One of the simplest designs for the SWCNT formation zone 86 is to transport the stabilized plasma 94 through a catalyst screen in the deposition nozzle where the plasma is exposed to catalyst 92. The catalyst screen can be made from a variety of materials, depending upon the operating temperature of the stabilization zone. Some of these materials include ceramic fiber mesh with a transition metallic catalyst coating, a metallic screen made directly from the transition metallic catalyst, a carbon fiber coated with a transition metallic catalyst, and/or a porous silica membrane with a transition metallic catalyst deposited on the "exit" side of the membrane. The flow rate, carbon concentration, pressure, and temperature should be carefully regulated. Differential pressure is used to push the SWCNT product out the exit port.

Another method introduces transition metal catalyst 92 into the formation zone as a gas phase organometallic compound or as metal nanoparticles. In this manner, the formation of SWCNT occurs in the flowing reactant stream and can be ejected for deposition on a surface. Yet another method is to coat a substrate with a transition metal catalyst 92 and allow the formation zone to occur just on the outside of the reactor on the substrate.

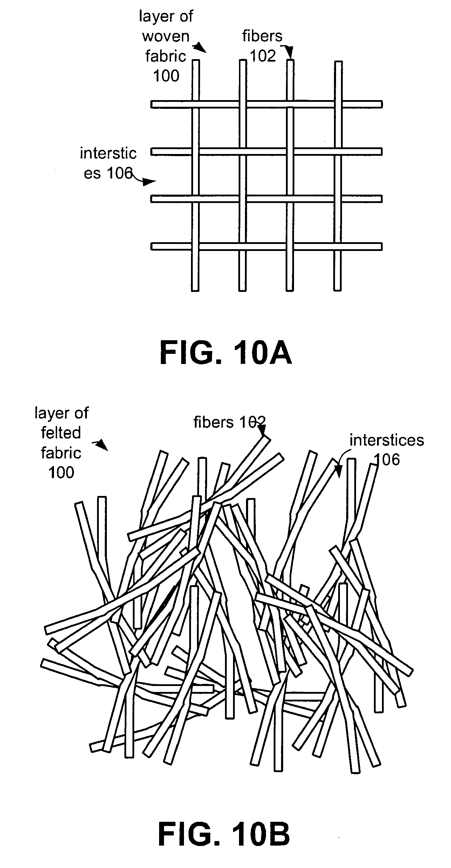

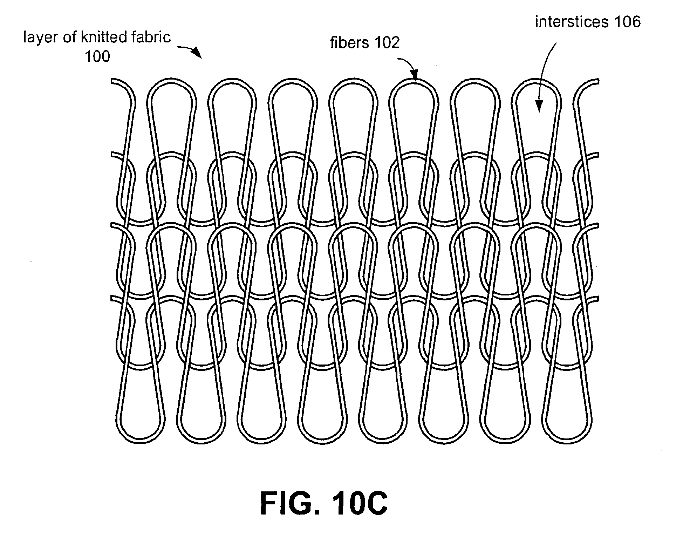

FIGs. 10A, 10B, and 10C depict potential substrates upon which SWCNTs may be formed within formation zone 86 of reactor 80. Although traditional substrates such as silicon, titanium, sapphire or other substrates known to those skilled in the art, may be used to form the SWCNTs and subsequent carbon alloys, fabrics such as the woven fabric depicted in FIG. 10A, felted fabric depicted in FIG. 10B, and knit fabric depicted in FIG. 10C may be used as a substrate. When these fabrics are used the carbon alloy is deposited on the fabric substrate and within interstices 104 between fibers 102. The carbon alloy may greatly enhance the physical properties of the fabric 100. Although FIG. 9 depicts only the formation of SWCNTs on substrate 94, it is possible to simultaneously deposit or synthesize SWCNTs as well as other carbon allotropes in order to form the carbon alloy during a single deposition. If the carbon allotropes are not deposited simultaneously, the additional carbon allotropes may be deposited in an additional deposition step. Post-processing, such as annealing may further enhance the physical properties of the carbon alloy on the substrate.

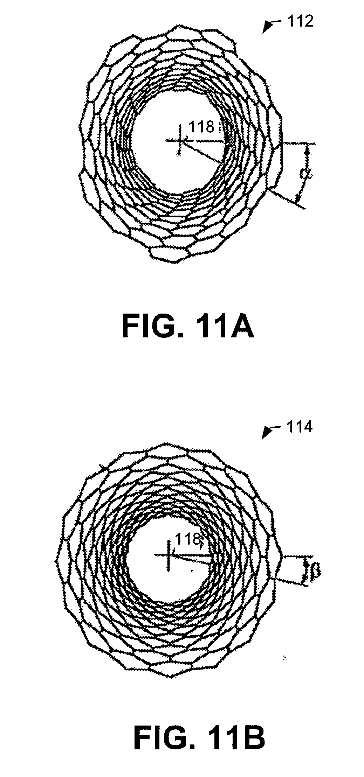

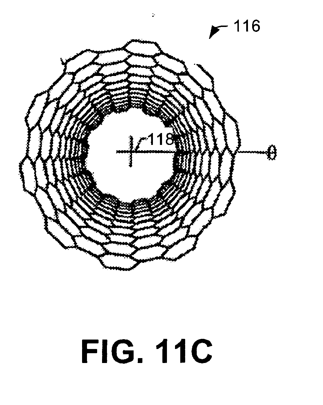

FiGs. 11A, 11B and 11C depict various lattice structures associated with SWCNTs to be utilized within the homogeneous mixture of carbon allotropes. Each carbon nanotube 102, 104 and 106 has a symmetrical axis 108 extending longitudinally along the centerline of each single-walled carbon nanotubes.

FIG. 11A depicts the lattice structure of an electrically insulating SWCNT. As such, applications of the present invention may include many insulating SWCNTs. Insulating lattice structure forms an angle alpha (α) from symmetrical axis 108, wherein α is 30°. In this lattice structure, each insulating single walled carbon nanotube 102 inhibits the flow of electricity.

FIG. 11 B illustrates the lattice structure of a semi conducting SWCNT 104. The lattice structure of each semi conducting SWCNT 104 is oriented at an angle beta (β) from symmetrical axis 108, wherein β is greater than 0° but less than 30°. This allows structure 104 to form a chiral configuration. Here, each semi conducting SWCNT 104 inhibits that flow of electricity therethrough.

FIG. 11C depicts the lattice structure of a highly conductive SWCNT 106 that super conducts electricity. Lattice structure 106 aligns parallel to symmetrical axis 108. Varying the lattice structures of each SWCNT within the ACA changes ACA's ability to conduct electricity therethrough. Physical characteristics can be chosen depending on the application. For example, the ACA may include any combination of insulating, semi conducting, and conducting SWCNTs. Additionally, the catalysts 92 can be varied to further vary the physical properties of the nanotube synthesized for the homogeneous mixture of carbon allotropes. In summary, an anisotropic carbon alloy (ACA) is formed from various carbon allotropes such as SWCNT, fullerenes, MWCNT, diamond-like carbon, diamond, nanocrystalline diamond, diamondoids, amorphous carbon, graphitic polyhedral crystals, graphite, graphene, HOPG, and hydrogenated amorphous carbon. The SWCNTs are present in different morphologies such as ropes, bundles, single filaments, tangled webs, etc. The SWCNT have large aspect ratios and weave throughout the ACA. By orienting or aligning the SWCNTs, directional physical properties of the SWCNTs may be observed in the ACA. Many morphologies of ACA are possible with a range of properties attainable as a function of the composition of carbon allotropes and post-processing techniques. Post-processing, such as annealing, can be done to further enhance particular properties of the ACA.

Although the present invention is described in detail, it should be understood that various changes, substitutions and alterations can be made hereto without departing from the spirit and scope of the invention as described by the appended claims.

## Claims

1. An alloy of carbon allotropes having enhanced directional physical properties, comprising:
a first carbon allotrope that exhibits directional properties, wherein elements of the first carbon allotrope are aligned with one another; and
at least one additional carbon allotrope, wherein elements of the at least one additional carbon allotrope couple with elements of the first carbon allotrope.

2. The alloy of carbon allotropes of Claim 1, wherein the first carbon allotrope comprises single-walled carbon nanotubes (SWCNTs).

3. The alloy of carbon allotropes of Claim 2, wherein the at least one additional carbon allotrope comprises at least one carbon allotrope selected from the group consisting of:
diamond-like carbon;
fullerenes;
multi-walled carbon nanotubes (MWCNT);
graphite;
graphene;
amorphous carbon; and
diamond.

4. The alloy of carbon allotropes of Claim 2, wherein SWCNTs comprise about 10% to about 60% of the homogeneous mixture of carbon allotropes.

5. The alloy of carbon allotropes of Claim 2, wherein:
SWCNTs comprise about 60% of the alloy of carbon allotropes; and
diamond-like carbon comprises about 40% of the alloy of carbon allotropes.

6. The alloy of carbon allotropes of Claim 2, wherein diamond-like carbon comprise about 30% to about 70% of the alloy of carbon allotropes.

7. The alloy of carbon allotropes of Claim 3, wherein the fullerenes comprise C60 and C70 molecules.

8. The alloy of carbon allotropes of Claim 7, wherein the fullerenes comprise approximately 90% C60 molecules, and approximately 10% C70 molecules.

9. The alloy of carbon allotropes of Claim 2, wherein the alloy of carbon allotropes exhibits:
a tensile modulus of about 55 Msi;
a tensile strength of approximately 1500 ksi; and
a density of 1.4.

10. The alloy of carbon allotropes of Claim 2, wherein the enhanced directional physical properties comprise at least one directional property selected from the group consisting of: electrical conductivity; thermal conductivity; strength; and stiffness.

11. An alloy of carbon allotropes having enhanced directional physical properties, comprising:
carbon nanotubes that exhibit directional properties, wherein elements of the carbon nanotubes are aligned with one another; and
at least one additional carbon allotrope, wherein elements of the at least one additional carbon allotrope couple with the carbon nanotubes.

12. The alloy of carbon allotropes of Claim 1, wherein the carbon nanotubes comprise single-walled carbon nanotubes (SWCNTs) and/or multi-walled carbon nanotubes (MWCNTs).

13. The alloy of carbon allotropes of Claim 12, wherein the enhanced directional physical properties comprise at least one directional property selected from the group consisting of: electrical conductivity; thermal conductivity; strength; and stiffness.

14. The alloy of carbon allotropes of Claim 13, wherein the at least one additional carbon allotrope comprises at least one carbon allotrope selected from the group consisting of:
diamond;
diamond-like carbon;
fullerenes;
multi-walled carbon nanotubes (MWCNT);
graphite;
graphene; and
amorphous carbon.

15. The alloy of carbon allotropes of Claim 14, wherein SWCNTs comprise about 10% to about 60% of the alloy of carbon allotropes.

16. The alloy of carbon allotropes of Claim 14, wherein diamond-like carbon comprise about 30% to about 70% of the alloy of carbon allotropes.

17. The alloy of carbon allotropes of Claim 14, wherein the fullerenes comprise C60 and C70 molecules.

18. The alloy of carbon allotropes of Claim 14, wherein the alloy of carbon allotropes forms on a substrate.

19. The alloy of carbon allotropes of Claim 18, wherein the alloy is used to translate energy across the substrate.

20. The alloy of carbon allotropes of Claim 19, wherein the substrate comprises a second alloy of carbon allotropes.

21. A method of forming an alloy of carbon allotropes that exhibits directional properties, comprising:
depositing a first carbon allotrope on a substrate, wherein the first carbon allotrope exhibits directional properties;
depositing at least one additional carbon allotrope on the substrate; and
aligning elements of the first carbon allotrope with one another.

22. The method of Claim 21, further comprising post processing of the alloy of carbon allotropes.

23. A method of forming an alloy of carbon allotropes that exhibits directional properties, comprising:
bonding elements of a first carbon allotrope and elements of at least one additional carbon allotrope with a temporary binder, wherein the first carbon allotrope exhibits directional properties;
aligning elements of the first carbon allotrope with one another;
bonding the aligned elements of the first carbon allotrope with the elements of the at least one additional carbon allotrope; and
removing the temporary binder.

24. A feed through reactor to deposit an alloy of carbon allotropes that exhibits directional properties on a continuous substrate, that comprises:
a plasma generation zone to generate a carbon plasma from a carbon feedstock;
a stabilization zone to stabilize the carbon plasma generated in the plasma generation zone;
a carbon allotrope formation zone operable to receive a continuously fed through substrate and deposit at least one allotrope of carbon that exhibits directional properties, and wherein elements of the allotrope of carbon that exhibits directional properties are aligned.
